# EUROPEAN PATENT SPECIFICATION

(11) **EP 1 171 729 B1**
(45) Date of publication and mention of the grant of the patent: **27.11.2002**
(21) Application number: 00922356.1
(22) Date of filing: 19.04.2000
(51) Int. Cl.: F16H 55/56, F16H 61/00

(54) **DRIVING PULLEY FOR A CONTINOUSLY VARIABLE TRANSMISSION**
TREIBSCHEIBE FÜR EIN STUFENLOSES REGELBARES GETRIEBE
POULIE D'ENTRAINEMENT POUR UNE TRANSMISSION A VARIATION CONTINUE

(30) Priority: 23.04.1999 CA 2270002
(43) Date of publication of application: 16.01.2002
(73) Proprietor: CVTECH R & D INC., Drummondville, Québec J2C 6X9 (CA)
(72) Inventor: LECLAIR, Alexandre, Boucherville, Québec J4B 2V9 (CA); MERCIER, Christian, Drummondville, Québec J2C 7T2 (CA); LACOULINE, Josée, St-Marc-des-Carrières, Quebec G0A 4B0 (CA); BRETON, Rémi, Saint-Charles-de-Drummond, Québec J2C 7H (CA)
(74) Representative: Schoppe, Fritz, Dipl.-Ing.
(86) International application number: CA0000436
(87) International publication number: WO00065252

(56) References cited:
- FR-A- 2 580 758
- FR-A- 2 598 477
- US-A- 3 665 781
- US-A- 3 709 052
- US-A- 3 868 862

## Description

The present invention relates to a driving pulley for use in a continuously variable transmission (CVT) that is particularly suitable for a scooter. It may also be used in other kinds of vehicles.

A continuously variable transmission (CVT) is a mechanical device in which the torque transmission ratio is infinitely variable over the required working range, by contrast to a conventional transmission in which there is a limited number of selectable torque transmission ratios. A CVT automatically changes the ratio as required by load and speed conditions, providing an increased torque under high loads at low speeds and yet controlling the rotation speed of the motor as the vehicle accelerates. It is commonly used in a wide range of vehicles, such as small cars or trucks, snowmobiles, golf carts, all-terrain vehicles (ATV) and scooters. A CVT is used with internal combustion engines or electric motors.

A conventional CVT comprises a driving pulley connected to a motor, a driven pulley connected to wheels or a track, and a trapezoidal drivebelt transmitting torque between the driving pulley and the driven pulley. The sides of the drivebelt are, on each pulley, gripped between two opposite flanges that are to be coaxially mounted around a main shaft. One of the flanges is axially movable with reference to the other. Each pulley is directly or indirectly in a torque-transmitting engagement with the main shaft.

The driving pulley comprises a centrifugal mechanism that tends to increase the ratio when the rotation speed of the driving pulley increases. To do so, the centrifugal mechanism is able to apply a force on the movable flange to move it closer to the fixed flange. This will force the drivebelt to wind on a larger diameter on the driving pulley. At the same time, the change in the position of the drivebelt will cause a radial force to be exerted on the flanges of the driven pulley, in addition to the tangential driving force by which the torque is transmitted. This radial force urges the second flange of the driven pulley away from the first flange thereof.

Initially, when the vehicle is stopped, the winding diameter of the driving pulley is minimum and the winding diameter of the driven pulley is maximum. This is referred to as the minimum ratio since there is the minimum number of rotations or fraction of rotation of the driven pulley for each full rotation of the driving pulley. Then, when the vehicle accelerates, the movable parts of the CVT will constantly seek to rearranged their position until an equilibrium is reached or until they reach the maximum ratio. The ratio at which the CVT stabilizes is an equilibrium between the forces on the drivebelt in the driving pulley and in the driven pulley.

At the maximum rotation speed of the driven pulley, the ratio is maximum as there is the maximum number of rotations or fraction of rotation of the driven pulley for each full rotation of the driving pulley.

When the rotation speed of the motor decreases, the force generated by the centrifugal mechanism decreases. Return springs located in the driving and driven pulleys allow the corresponding movable flanges to move back to their original low ratio position.

The driven pulley of a CVT is also torque-sensitive. This allows the driven pulley to counterbalance the force generated by the centrifugal mechanism of the driving pulley so as to allow the motor speed to rise before the CVT starts upshifting during an acceleration from a low speed or to lower the ratio if proper conditions are met. This is caused by a cam system that tends to move the movable flange towards the fixed flange of the driven pulley when the torque increases, thereby pulling back on the drivebelt and fighting the opposite force from the driving pulley.

A conventional cam system of a driven pulley comprises a cam plate having a plurality of symmetrically-disposed inclined cam surfaces on which respective cam followers are engaged. The cam followers are generally slider buttons or rollers. The cam plate or the set of cam followers is mounted at the back side of the movable flange and the other of them is rigidly connected to the main shaft.

An example of a CVT is disclosed in U.S. patent No. 3,709,052 granted on 09 January 1973 to Lassanske. It discloses a CVT using a drivebelt located between the conical walls of two coaxial flanges mounted around a common shaft, one of which is axially movable and the other being fixed to the shaft by appropriate means. The movable flange is also in torque-transmitting engagement with the shaft. Both flanges are coaxial as they are connected to a common shaft. The CVT comprises flyweight elements that are movable radially under the influence of centrifugal force. Initially, there is no contact between the movable flange and the drivebelt. When the rotation speed Increases, the initial engagement of the drivebelt with the movable flange is delayed by blocking means which consist essentially of balls that are movable between a blocking position and a retracted position. The engagement is allowed when the rotation speed is at a desired level. A coil spring is also set between the movable flange and the shaft for generating a return force.

In a scooter, a conventional CVT further comprises a centrifugal clutch mounted next to the driven pulley. The centrifugal clutch is used to disengage the mechanical connection between the driven pulley and the output shaft when the scooter is stopped or if it moves too slowly. This allows the motor to at least operate at idle speed. The driving pulley, the driven pulley and the drivebelt are always rotating when the motor operates. Whenever the rotation speed of the motor increases, the rotation speed of the driven pulley increases as well and the clutch is moved to its engaged position under the effect of the centrifugal force that acts on small inwardly-biased flyweights. The flyweights are provided with friction pads. These pads eventually reach the interior side of a drum and force it to rotate as the friction engagement increases with an increase of the rotation speed. The friction pads and the drum remain connected as long as the rotation speed is above a threshold value.

The CVT of a scooter is generally located in a protective housing . This housing have the drawback of reducing the heat transfers between the CVT and the atmosphere. Yet, the centrifugal clutch is an important heat source. The temperature reached inside the housing during the operation of the CVT can be quite high, especially when the CVT is used in a hot environment. This may reduce the service life of the drivebelt since it generally decreases when the average operating temperature increases.

Unlike scooters and other vehicles, snowmobiles have successively used CVTs that are provided only with a driving pulley, a driven pulley and a drivebelt. The driving pulley is used as a clutch since the spacing between the two flanges thereof is allowed to be greater than the width of the drivebelt at low motor rotation speed. This corresponds to the disengaged position of the CVT and no force is then transmitted to the drivebelt from the motor, which is allowed to rotate freely at idle speed. As soon as the rotation speed of the motor increases, the flyweights inside the driving pulley come into action and force the movable flange to move toward the fixed flange. The drivebelt will eventually be gripped between the two flanges and the CVT will be in the engaged position. The drivebelt remains engaged in the driving pulley until the rotation speed is low enough so that the movable flange be moved out of engagement with the drivebelt under the action of the return spring.

In normal operating conditions, using the sides of a drivebelt as a friction element for the progressive engagement of the CVT does not significantly wear a good quality drivebelt. Recent improvements in the field of drivebelts lead to products that can have a long service life, in spite of the intense solicitation of the material. These drivebelts comprise Kevlar® or other synthetic materials. Moreover, the use of the drivebelt as the clutch is more efficient and generates less heat that the conventional centrifugal clutch with friction pads.

As aforesaid, a conventional driving pulley is usually provided with an helical spring to generate a return force. The return force generated by the spring is inversely proportional to the distance between the movable flange and the fixed flange. This is exactly the opposite of what it should be. Ideally, the return force should be maximum at the position of the movable flange where the drivebelt is disengaged and be proportional to the distance between the flanges of the driving pulley. A weaker return force at a higher ratio allows the driving pulley to respond more quickly and be more efficient.

It is the object of the present invention to provide a scooter with a CVT that uses the drivebelt as a clutch instead of a conventional centrifugal clutch with friction pads. One of the advantages of such arrangement is the reduction of the average temperature inside the housing of the CVT, which thus increases the service life of the drivebelt. It is also an object of the present invention to provide a driving pulley with a return mechanism that generates a return force proportional to the distance between the two flanges, more particularly a return force which decreases when the two flanges are moved closer to each other.

More particularly, the present invention provides a driving pulley for a continuously variable transmission, the driving pulley being coaxially mountable around a drive shaft and rotatable at a variable rotation speed, the driving pulley comprising:
a first flange having one side provided with a conical wall;
a second flange having opposite first and second sides, the second flange being coaxial with the first flange and having a conical wall provided on the first side thereof, the conical wall facing the conical wall of the first flange to form a drivebelt-receiving groove around which a drivebelt is partially wound, the second flange being axially movable with reference to the first flange between a distal position and a proximal position, the drivebelt-receiving groove is wider than the drivebelt when the second flange is at the distal position, whereby there is no contact between the conical wall of the second flange and a corresponding side of the drivebelt when the second flange is at the distal position;
a first means for connecting the first flange to the drive shaft in a torque-transmitting engagement;
a second means for connecting the second flange to the drive shaft in a torque-transmitting engagement;
a third means for generating a first force urging the second flange to move towards the first flange, the third means being responsive of the rotation speed of the driving pulley; and
a fourth means for generating a second force urging the second flange to move away from the first flange.

The driving pulley is characterized in that the fourth means generate the second force with a maximum magnitude when the second flange is substantially at the distal position and with a minimum magnitude when the second flange is substantially at the proximal position.

According to a first embodiment of the present invention, the fourth means comprise at least one torsion spring having at least one coiled portion and a lever arm, the lever arm being in a sliding engagement with a corresponding convexly curved ramp. The coiled portion is connected to one among the second flange and the end plate. The convexly curved ramp is then provided on the other of them.

In a second embodiment of the present invention, the fourth means comprise a magnet mounted on one among the second side of the second flange and an interior side of the end plate. The other of them is provided with a corresponding magnetically-attractable portion In registry with the magnet.

In a third embodiment of the present invention, the fourth means comprise a Belleville spring mounted between the end plate and the second flange. The Belleville spring is preloaded to substantially work with a negative spring rate.

The present invention will be better understood from the following description and appended figures in which:

FIG. 1 is an exploded perspective view of a CVT incorporating a driving pulley according to a first and preferred embodiment of the present invention.

FIG. 2 is a rear elevation view of the movable flange of the driving pulley shown in FIG. 1.

FIG. 3 is a longitudinal cross-sectional view of the driving pulley shown in FIG. 1, showing the driving pulley in a disengaged position.

FIG. 4 is a view similar to FIG. 3, showing the driving pulley in an engaged position and at a low ratio.

FIG. 5 is a view similar to FIGS. 3 and 4, showing the driving pulley in an engaged position and at a high ratio.

FIG. 6 is a rear elevation view of the movable flange of the driving pulley according to a second embodiment of the present invention.

FIG. 7 is a longitudinal cross-sectional view of the driving pulley according to the second embodiment, showing the driving pulley in a disengaged position.

FIG. 8 is a view similar to FIG. 7, showing the driving pulley in an engaged position and at a high ratio.

FIG. 9 is a front elevation view of a Belleville spring.

FIG. 10 is a longitudinal cross-sectional view of the driving pulley according to a third embodiment, showing the driving pulley in a disengaged position and showing the position of some of the same elements in an engaged and high ratio position.

FIG. 11 is a graph illustrating a typical example of the relationship between the spring force and the deflection of a Belleville spring.

FIG. 12 is a graph showing an example of the relationship between the axial force from the torsion springs and the ratio of the driving pulley.

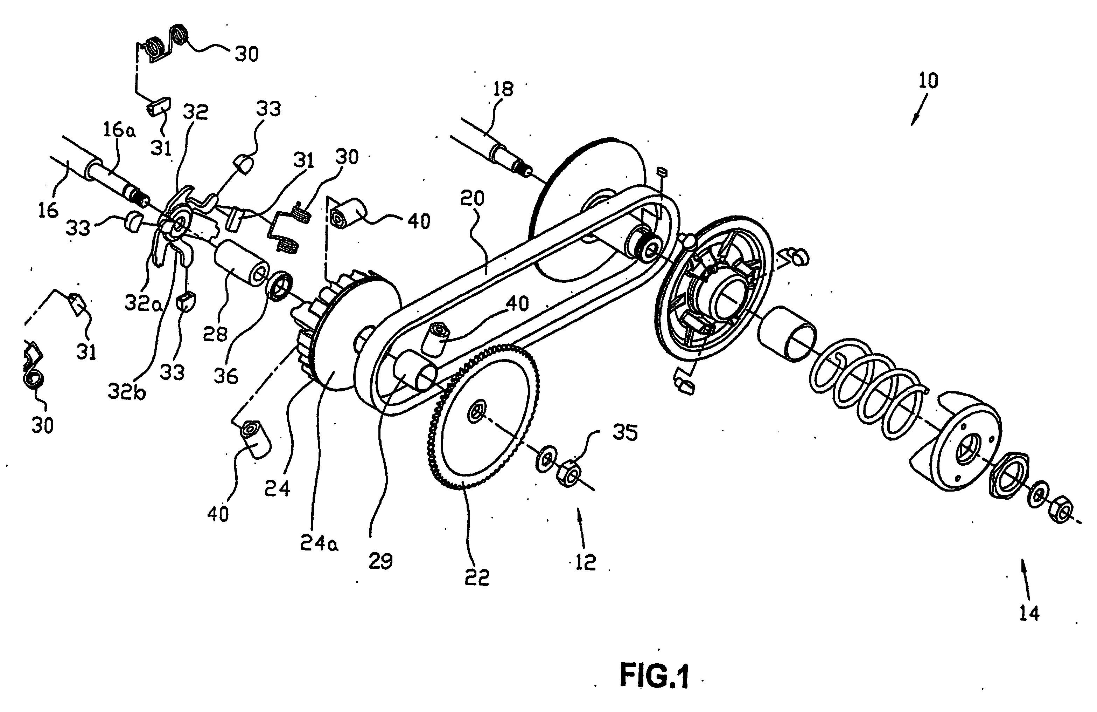

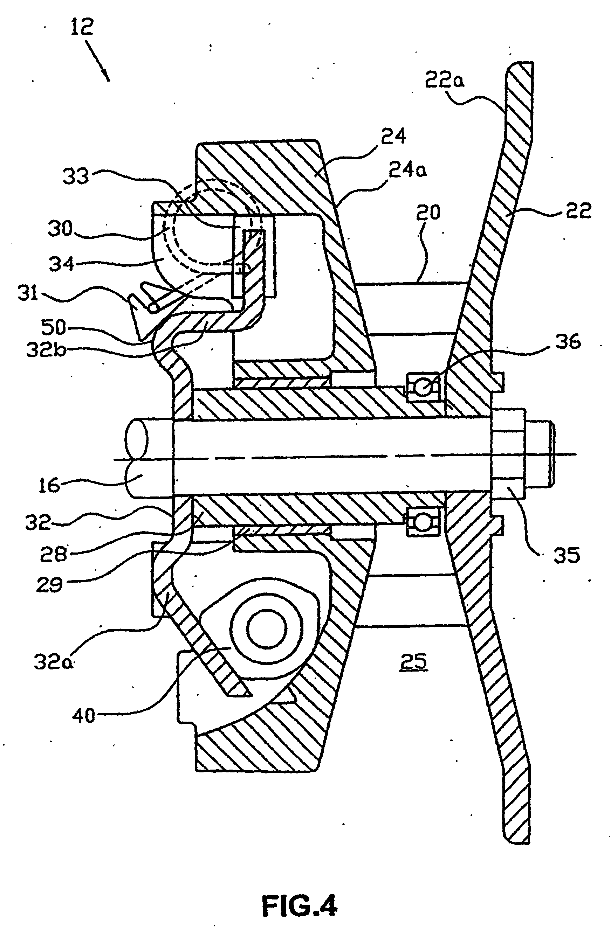

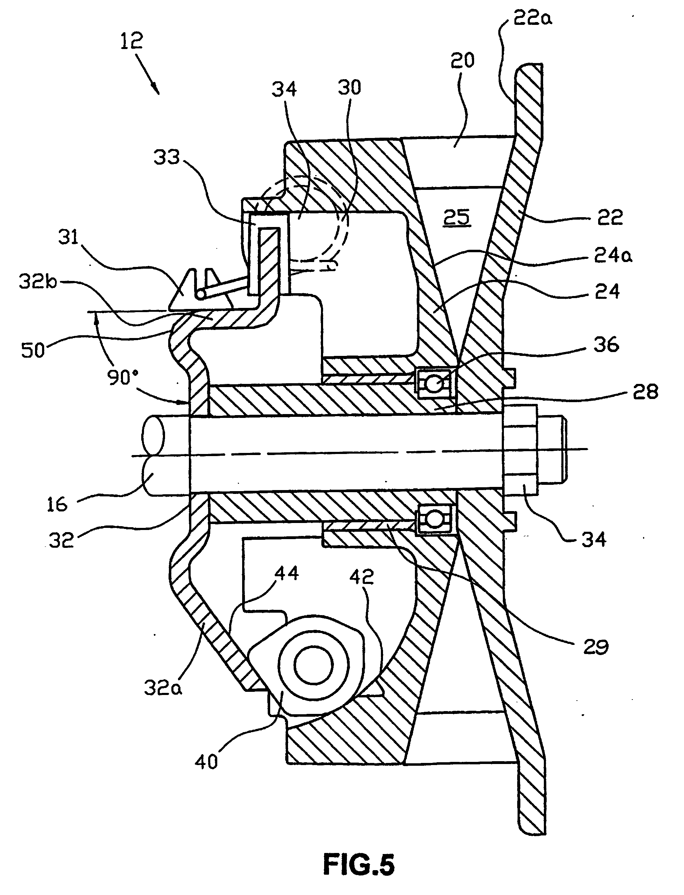

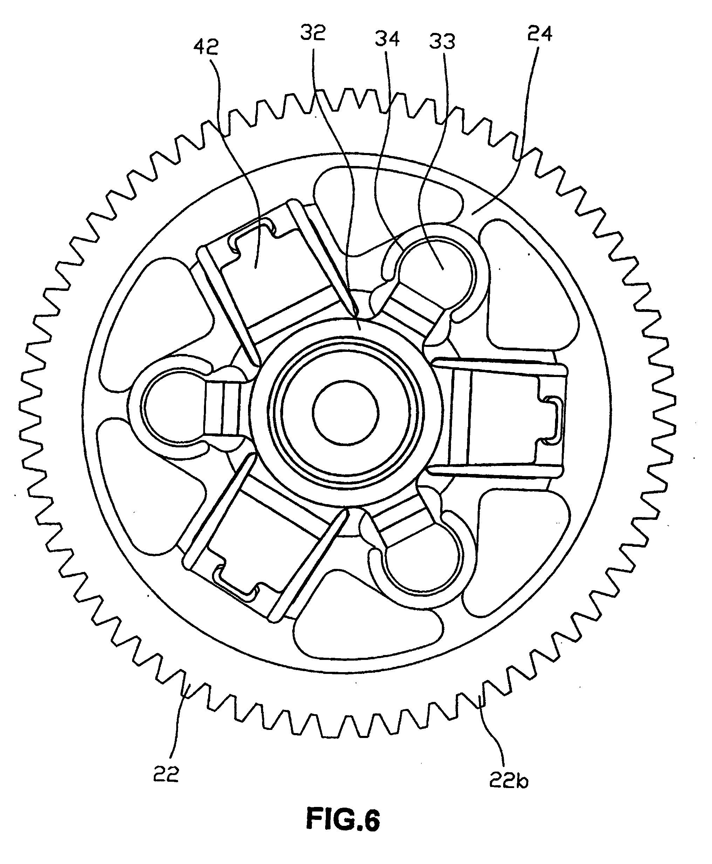

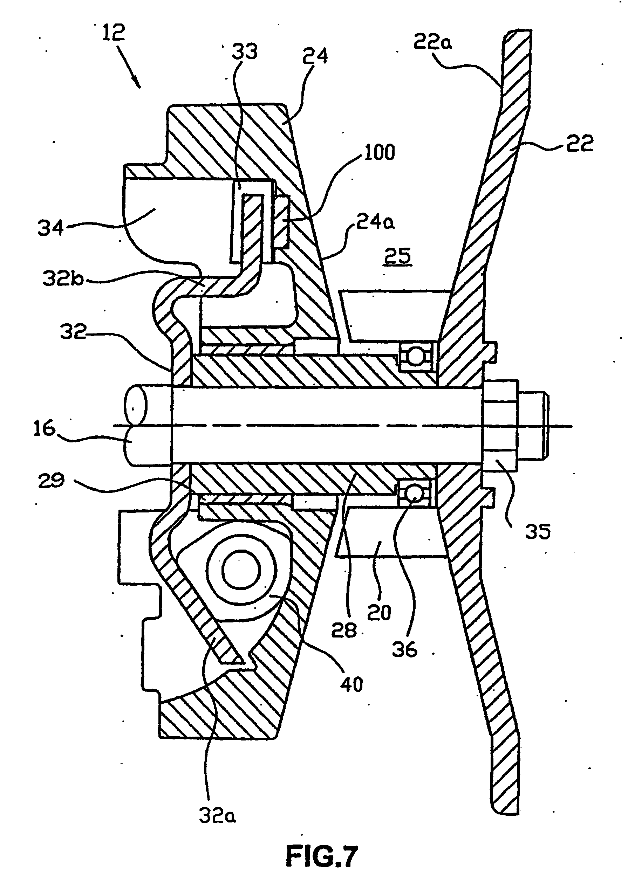

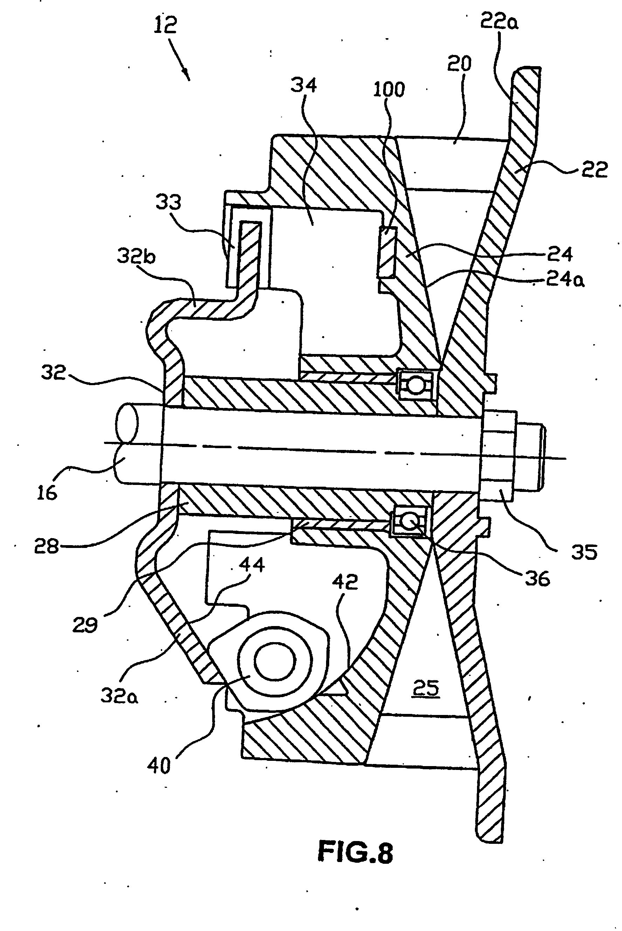

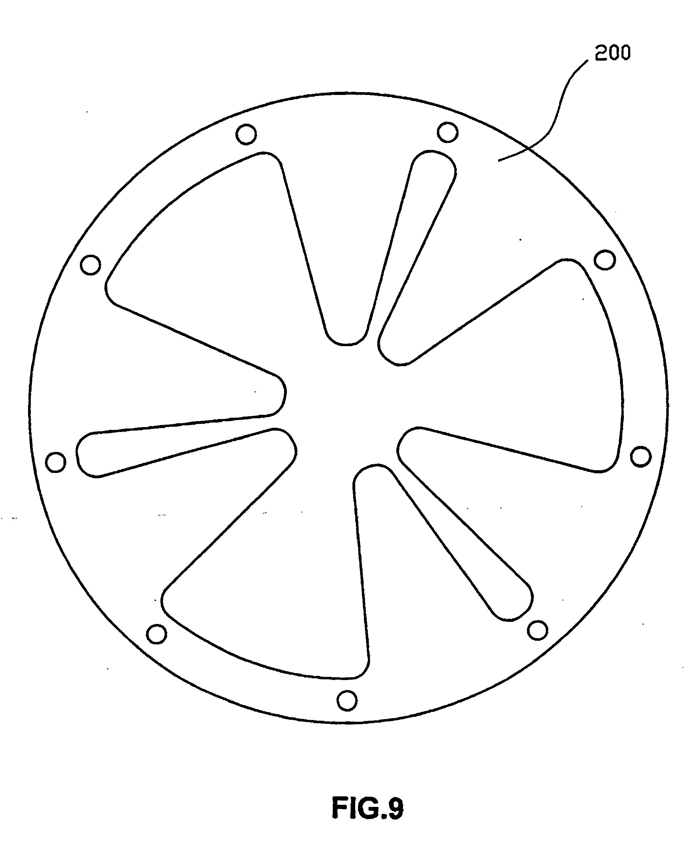

A driving pulley (12) according to three possible embodiments of the present invention are described hereinafter and illustrated in the appended figures. The first and preferred embodiment is shown in FIGS. 1 to 5. The second embodiment in shown in FIGS. 6 to 8. FIGS. 9 to 11 show the third embodiment.

These embodiments are well adapted for relatively small driving pulleys, such as the ones found in the CVTs of scooters and other small vehicles. However, their use is not limited to those vehicles and driving pulleys incorporating these features can be used in all other suitable applications as well.

### First embodiment: Torsion springs

FIG. 1 is an exploded perspective view of a typical CVT (10) according to the first embodiment of the present invention and which is to be used in a scooter. The CVT (10) comprises a driving pulley (12) and a driven pulley (14). The driving pulley (12) is coaxially mounted on a drive shaft (16) that is mechanically connected to a motor (not shown). The driven pulley (14) is coaxially mounted on an output shaft (18) that is mechanically connected to the rear wheel (not shown) or any other parts to be driven. A drivebelt (20) is partially wound around the driving pulley (12) and the driven pulley (14).

The driving pulley (12) comprises a first flange, also called "fixed flange (22)", and a second flange, also called "movable flange (24)", that is axially movable with reference to the fixed flange (22). The periphery of the inner conical wall (22a) of the fixed flange (22) is provided with a plurality of teeth (22b) used for engagement with the pinion of the starter (not shown). A back plate (22c) Is located on the opposite side.

The movable flange (24) is mounted around a spacer (28) surrounded by a bushing (29). An end plate (32) faces the back side of the movable flange (24). These parts are inserted on a section (16a) of the drive shaft (16) having a smaller diameter. A nut (35) is used to rigidly connect the fixed parts of the driving pulley (12) to the drive shaft (16). Of course, there are many other ways of achieving a rigid connection, as apparent to a person skilled In the art.

Preferably, a bearing (36) Is used to eliminate the parasitic driving torque that can be transmitted by friction between the spacer (28) and an inner side of an upper section of the drivebelt (20) when the conical wall (24a) of the movable flange (24) is not In contact with the corresponding side of the drivebelt (20). The drivebelt (20) then falls towards the center of the driving pulley (12) due to gravity. The bearing (36) is coaxially mounted around the drive shaft (16) between the fixed (22) and the movable flange (24), more particularly around an end of the spacer (28). The outer surface of the outer race of the bearing (36) will support the inner side of an upper section of the drivebelt (20).

Preferably, a set of symmetrically-disposed flyweights (40) is provided between the back side of the movable flange (24) and first arms (32a) of the end plate (32). The actual form of the flyweights (40) may differ from what is illustrated in the appended figures, as apparent to a person skilled in the art. There are preferably three flyweights (40) and an identical number of first arms (32a).

The back side of the movable flange (24) is provided with a set of ramps (42). Each ramp (42) faces a respective first arm (32a) and converge therewith toward the exterior. The interior side of the first arms (32a) also form ramps (44). Each flyweight (40) is then set between a corresponding pair of opposite and outwardly-converging ramps (42,44). An outward movement of the flyweights (40) will push the ramps (42,44) away from each other, thus bringing the movable flange (24) closer to the fixed flange (22).

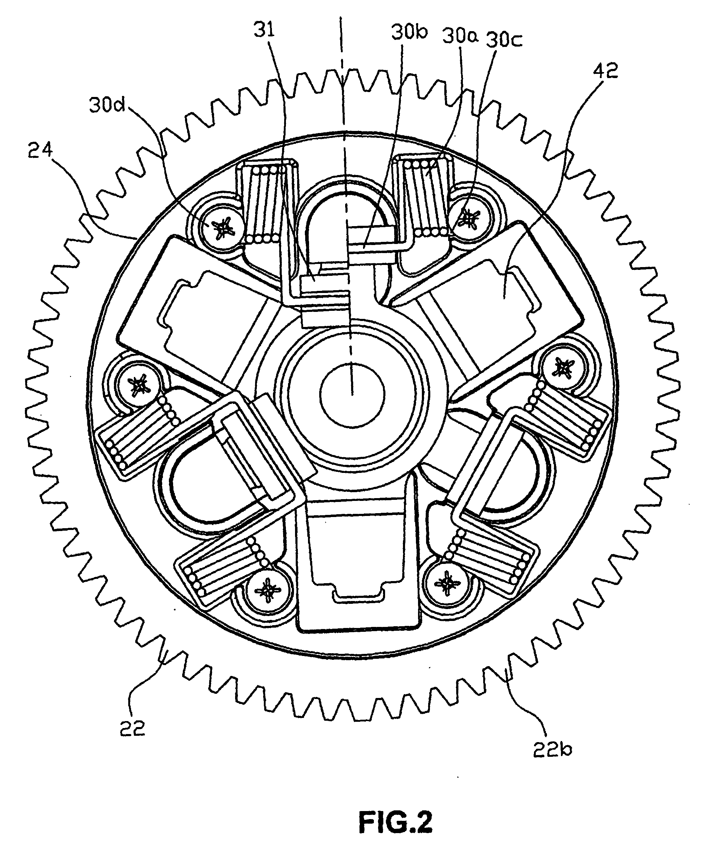

The first embodiment uses at least one torsion spring (30) that is preferably mounted on the back side of the movable flange (24) of the driving pulley (12). There are preferably three torsion springs (30). These springs (30) are double-sided and each of them comprise two opposite coil portions (30a) having a lever arm (30b) defined between them. Other kinds and quantity of torsion springs (30) are also possible. As shown in FIG. 2, the end prongs (30c) of each spring (30) are clamped by a bolt (30d) which also control the initial load of the corresponding spring (30). The lever arm (30b) is connected to a skid (31) made of a material having a low friction coefficient with metal. Each skid (31) is in engagement with a convexly curved ramp (50) provided on the exterior side of a respective second arm (32b) of the end plate (32). Each second arm (32b) has a substantially L-shaped end. Sliding buttons (33) or the like are provided at the tip of the second arms (32b) for achieving a sliding engagement with a respective slot (34) located on the back side of the movable flange (24). The sliding buttons (33) are made of a low friction material. This allows the torque to be transferred between the end plate (32) and the movable flange (24), regardless of the axial position of the latter. It should be noted that other means can be provided to connect the second flange (24) to the drive shaft (16). For instance, a linear bearing (not shown) can be used.

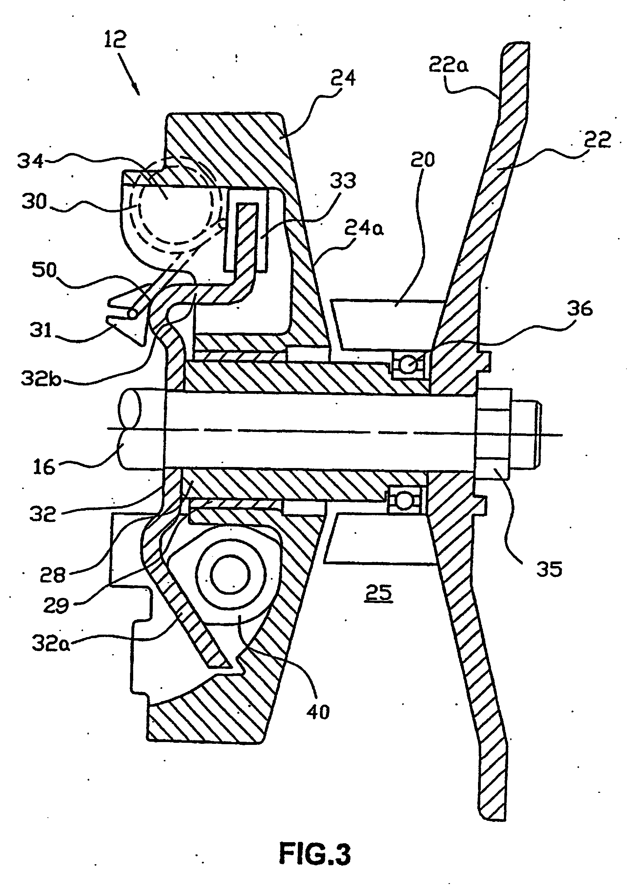

The specific shape of the second arms (32b) allows the angle of the return force vector to vary in function of the relative position between the movable flange (24) and the end plate (32). As shown in FIGS. 3 to 5, the axial component of the return force vector is orthogonal with reference to the longitudinal axis of the driving pulley (12) when the movable flange (24) is away from the end plate (32) and close to the fixed flange (22). This corresponds to the position range where the drivebelt (20) is in engagement with the driving pulley (12) and there is virtually no return force from the springs (30). On the other hand, the angle is substantially parallel to the longitudinal axis when the movable flange (24) is close to the end plate (32) and away from the fixed flange (22). This corresponds to the position range where the drivebelt (20) is disengaged from the driving pulley (12). This arrangement thus accomplishes the desired goal, which is to provide a return force that is proportional to the distance between the movable flange (24) and the fixed flange (22).

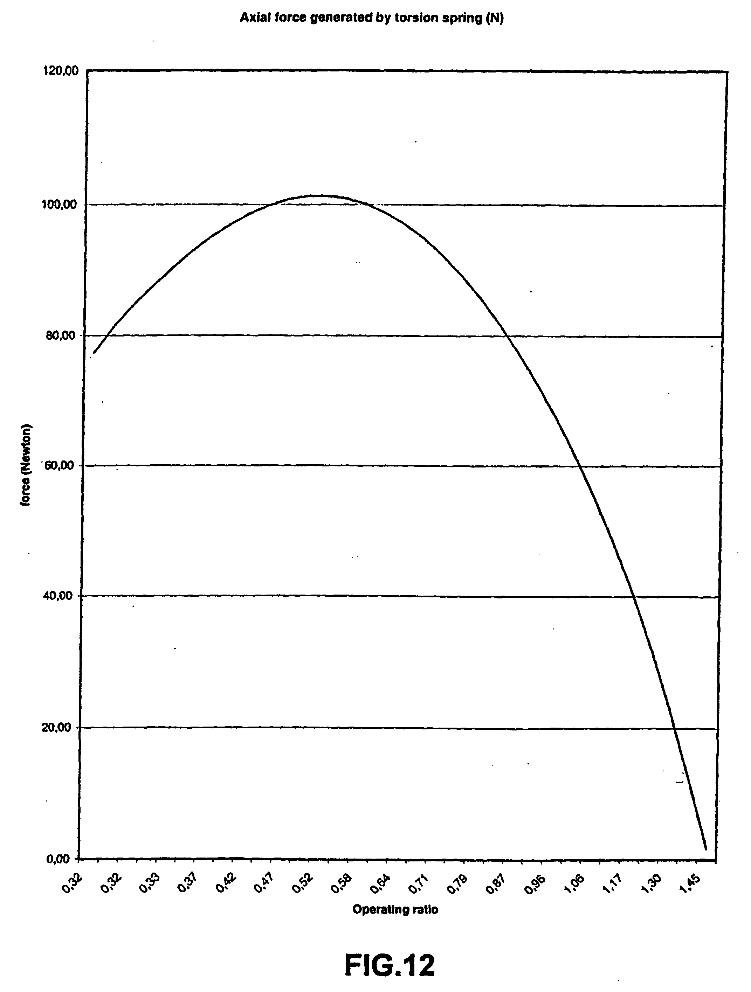

FIG. 12 shows an example of the relationship between the axial force from the torsion springs (30) and the ratio of the driving pulley (12).

### Second embodiment: Magnets

This embodiment is depicted in FIGS. 6 to 8. Most of the parts of the CVT (10) in this embodiment are identical or similar to the ones of the first embodiment. The main difference is that the torsion springs are replaced by magnets (100). These magnets (100) are preferably located in respective bores in the back side of the movable flange (24). They attract the end of the second arms (32b) when they are close to them. They thus come into action only near or at the disengaged position. The return force becomes insignificant as soon as the movable flange (24) and the end plate (32) are slightly away from each other. The magnets (100) are made of an appropriate metallic material. Alternatively, the magnets (100) can be mounted on the second arms (32b) and act on the back side of the movable flange (24). Also, an opposite set of magnets (not shown) can also be provided on the second arms (62) or the movable flange (24).

### Third embodiment: Belleville spring

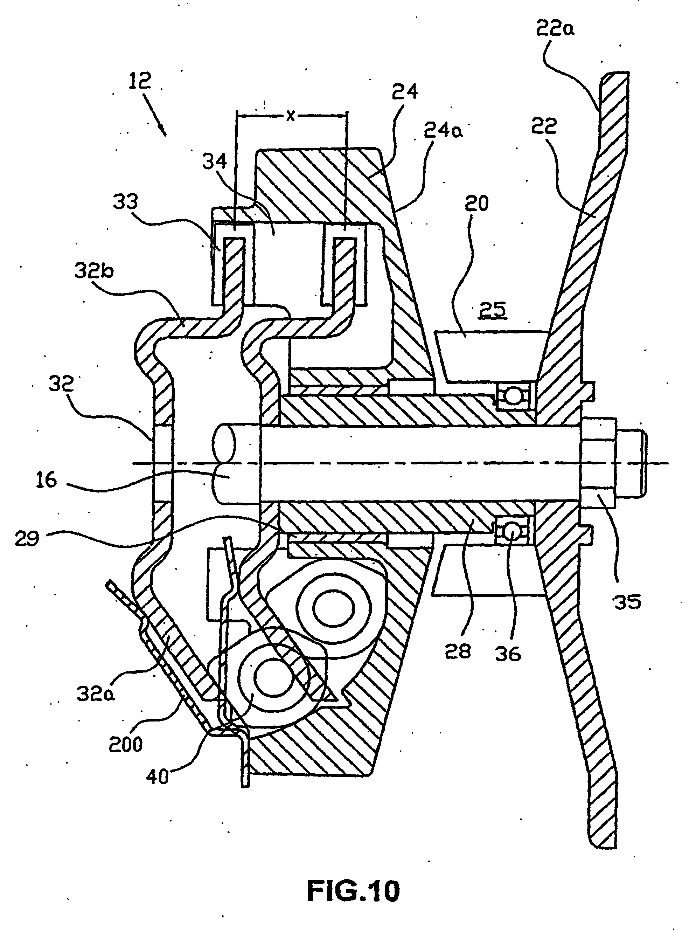

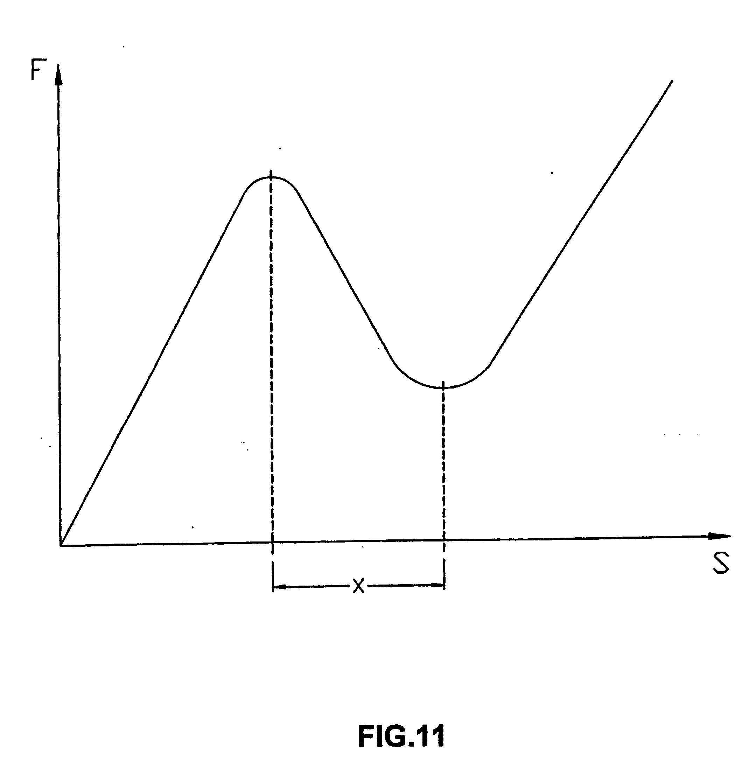

The third embodiment is depicted in FIGS. 9 to 11. Again, most of the parts of the CVT (10) in this embodiment are identical or similar to the ones of the first embodiment. The main difference with the first embodiment is that the torsion springs are replaced by a Belleville spring (200) mounted between the back side of the movable flange (24) and the end plate (32). As shown in FIG. 11, the Belleville spring (200) is a spring that provides a negative spring rate over a specific range of deflection. The driving pulley (12) is thus designed such that the position range (x) of the movable flange (24) corresponds to that specific range of deflections. The return force is then maximum when the movable flange (24) is close to the end plate (32) and away from the fixed flange (22), and minimum when the movable flange (24) is away from the end plate (32) and close to the fixed flange (22). FIG. 10 shows these two positions.

The invention is not limited to the described embodiments and encompasses any alternative embodiments within the limits defined by the claims.

## Claims

1. A driving pulley (12) for a continuously variable transmission (10), the driving pulley (12) being coaxially mountable around a drive shaft (16) and rotatable at a variable rotation speed, the driving pulley (12) comprising:
a first flange (22) having one side provided with a conical wall (22a);
a second flange (24) having opposite first and second sides, the second flange (24) being coaxial with the first flange (22) and having a conical wall (24a) provided on the first side thereof, the conical wall (24a) facing the conical wall (22a) of the first flange (22) to form a drivebelt-receiving groove (25) around which a drivebelt (20) is partially wound, the second flange (24) being axially movable with reference to the first flange (22) between a distal position and a proximal position, the drivebett-receiving groove (25) being widerthan the drivebelt (20) when the second flange (24) is at the distal position, whereby there is no contact between the conical wall (24a) of the second flange (24) and a corresponding side of the drivebelt (20) when the second flange (24) is at the distal position;
a first means for connecting the first flange (22) to the drive shaft (16) in a torque-transmitting engagement;
a second means for connecting the second flange (24) to the drive shaft (16) in a torque-transmitting engagement;
a third means for generating a first force urging the second flange (24) to move towards the first flange (22), the third means being responsive of the rotation speed of the driving pulley (12); and
a fourth means for generating a second force urging the second flange (24) to move away from the first flange (22);
the driving pulley (12) being **characterized in that** the fourth means comprise at least one torsion spring (30) having at least one coiled portion (30a) and a lever arm (30b), the lever arm (30b) being in a sliding engagement with a corresponding convexly curved ramp (50), the coiled portion (30a) being connected to one among the second flange (24) and the end plate (32), and the convexly curved ramp (50) being provided on the other of them, whereby the fourth means generate the second force with a maximum magnitude when the second flange (24) is substantially at the distal position and with a minimum magnitude when the second flange (24) is substantially at the proximal position.

2. A driving pulley (12) according to claim 1, **characterized in that** there are at least two pairs of torsion spring (30) and corresponding convexly curved ramp (50).

3. A driving pulley (12) according to claim 1, **characterized in that** there are three pairs of torsion spring (30) and corresponding convexly curved ramp (50).

4. A driving pulley (12) according to any one of claims 1 to 3, **characterized in that** the lever arm (30b) of each torsion spring (30) comprises a low-friction skid (31).

5. A driving pulley (12) for a continuously variable transmission (10), the driving pulley (12) being coaxially mountable around a drive shaft (16) and rotatable at a variable rotation speed, the driving pulley (12) comprising:
a first flange (22) having one side provided with a conical wall (22a);
a second flange (24) having opposite first and second sides, the second flange (24) being coaxial with the first flange (22) and having a conical wall (24a) provided on the first side thereof, the conical wall (24a) facing the conical wall (22a) of the first flange (22) to form a drivebelt-receiving groove (25) around which a drivebelt (20) is partially wound, the second flange (24) being axially movable with reference to the first flange (22) between a distal position and a proximal position, the drivebelt-receiving groove (25) being wider than the drivebelt (20) when the second flange (24) is at the distal position, whereby there is no contact between the conical wall (24a) of the second flange (24) and a corresponding side of the drivebelt (20) when the second flange (24) Is at the distal position;
a first means for connecting the first flange (22) to the drive shaft (16) in a torque-transmitting engagement;
a second means for connecting the second flange (24) to the drive shaft (16) in a torque-transmitting engagement;
a third means for generating a first force urging the second flange (24) to move towards the first flange (22), the third means being responsive of the rotation speed of the driving pulley (12); and
a fourth means for generating a second force urging the second flange (24) to move away from the first flange (22);
the driving pulley (12) being **characterized in that** the fourth means comprise a magnet (100) mounted on one among the second side of the second flange (24) and an interior side of the end plate (32), the other of them being provided with a corresponding magnetically-attractable portion in registry with the magnet (100), whereby the fourth means generate the second force with a maximum magnitude when the second flange (24) is substantially at the distal position and with a minimum magnitude when the second flange (24) is substantially at the proximal position.

6. A driving pulley (12) for a continuously variable transmission (10), the driving pulley (12) being coaxially mountable around a drive shaft (16) and rotatable at a variable rotation speed, the driving pulley (12) comprising:
a first flange (22) having one side provided with a conical wall (22a);
a second flange (24) having opposite first and second sides, the second flange (24) being coaxial with the first flange (22) and having a conical wall (24a) provided on the first side thereof, the conical wall (24a) facing the conical wall (22a) of the first flange (22) to form a drivebelt-receiving groove (25) around which a drivebelt (20) is partially wound, the second flange (24) being axially movable with reference to the first flange (22) between a distal position and a proximal position, the drivebelt-receiving groove (25) is widerthan the drivebelt (20) when the second flange (24) is at the distal position, whereby there is no contact between the conical wall (24a) of the second flange (24) and a corresponding side of the drivebelt (20) when the second flange (24) is at the distal position;
a first means for connecting the first flange (22) to the drive shaft (16) in a torque-transmitting engagement
a second means for connecting the second flange (24) to the drive shaft (16) in a torque-transmitting engagement;
a third means for generating a first force urging the second flange (24) to move towards the first flange (22), the third means being responsive of the rotation speed of the driving pulley (12); and
a fourth means for generating a second force urging the second flange (24) to move away from the first flange (22);
the driving pulley (12) being **characterized in that** the fourth means comprise a Belleville spring (200) mounted between the end plate (32) and the second flange (24), the Belleville spring (200) being preloaded to substantially work with a negative spring rate, whereby the fourth means generate the second force with a maximum magnitude when the second flange (24) is substantially at the distal position and with a minimum magnitude when the second flange (24) is substantially at the proximal position.

7. A driving pulley (12) according to any one of claims 1 to 6, **characterized in that** the third means comprise at least two flyweights (40) symmetrically-disposed around the drive shaft (16), each flyweight (40) being set between a corresponding pair of opposite and outwardly-converging ramps (42,44), one of the ramps (42,44) of each pair being provided on the second side of the second flange (24) and the other being provided on an interior side of an end plate (32) fixed with reference to the first flange (22), the interior side facing the second side of the second flange (24).

8. A driving pulley (12) according to any one of claims 1 to 7, **characterized in that** the second means comprise a sliding engagement between the second flange (24) and the end plate (32).

9. A driving pulley (12) according to claim 8, **characterized in that** the second means comprise at least one slider button (33) located on one among the second flange (24) and the end plate (32), and at least one corresponding slot (34) located on the other one among the second flange (24) and the end plate (32).

10. A driving pulley (12) according to any one of claims 1 to 9, **characterized in that** the first means comprise a rigid connection between the first flange (22) and the drive shaft (16).

11. A driving pulley (12) according to any one of claims 1 to 10, **characterized in that** it comprises a bearing (36) coaxially mountable around the drive shaft (16) between the first (22) and the second flange (24), the bearing (36) having an outer race including an outer surface supporting an inner side of an upper section of the drivebelt (20) when the conical wall (24a) of the second flange (24) is not in contact with the corresponding side of the drivebelt (20).

12. A driving pulley (12) according to any one of claims 1 to 11, **characterized in that** the driving pulley (12) is mechanically connected to the drive shaft (16) of a scooter.

## Patentansprüche

1. Eine Antriebsrolle (12) für ein kontinuierlich veränderliches Getriebe (10), wobei die Antriebsrolle (12) koaxial um eine Antriebswelle (16) befestigbar und mit einer variablen Drehgeschwindigkeit drehbar ist, wobei die Antriebsrolle (12) folgende Merkmale umfaßt:
einen ersten Flansch (22) mit einer Seite, die mit einer konischen Wand (22a) versehen ist;
einen zweiten Flansch (24) mit gegenüberliegenden ersten und zweiten Seiten, wobei der zweite Flansch (24) koaxial mit dem ersten Flansch (22) ist und eine konische Wand (24a) aufweist, die auf der ersten Seite desselben vorgesehen ist, wobei die konische Wand (24a) der konischen Wand (22a) des ersten Flansch (22) zugewandt ist, um eine Antriebsriemenaufnahmerille (25) zu bilden, um die ein Antriebsriemen (20) teilweise gewickelt ist, wobei der zweite Flansch (24) bezüglich des ersten Flansch (22) zwischen einer distalen Position und einer proximalen Position axial beweglich ist, wobei die Antriebsriemenaufnahmerille (25) breiter ist als der Antriebsriemen (20), wenn sich der zweite Flansch (20) in der distalen Position befindet, wodurch es keinen Kontakt zwischen der konischen Wand (24a) des zweiten Flansch (24) und einer entsprechenden Seite des Antriebsriemens (20) gibt, wenn sich der zweite Flansch (24) in der distalen Position befindet;
eine erste Einrichtung zum Verbinden des ersten Flansch (22) mit der Antriebswelle (16) in einer Drehmomentübertragungseingriffnahme;
eine zweite Einrichtung zum Verbinden des zweiten Flansch (24) mit der Antriebswelle (16) in einer Drehmomentübertragungseingriffnahme;
eine dritte Einrichtung zum Erzeugen einer ersten Kraft, die den zweiten Flansch (24) zwingt, sich zu dem ersten Flansch (22) zu bewegen, wobei die dritte Einrichtung auf die Drehgeschwindigkeit der Antriebsrolle (12) anspricht; und
eine vierte Einrichtung zum Erzeugen einer zweiten Kraft, die den zweiten Flansch (24) zwingt, sich weg von dem ersten Flansch (22) zu bewegen;
wobei die Antriebsrolle (12) **dadurch gekennzeichnet ist, daß** die vierte Einrichtung zumindest eine Torsionsfeder (30) mit zumindest einem gewickelten Abschnitt (30a) und einem Hebelarm (30b) umfaßt, wobei der Hebelarm (30b) in einer gleitenden Eingriffnahme mit einer entsprechenden konvex gebogenen Rampe (50) ist, wobei der gewickelte Abschnitt (30a) entweder mit dem zweiten Flansch (24) oder der Endplatte (32) verbunden ist, und die konvex gebogene Rampe (50) auf der anderen derselben vorgesehen ist, wodurch die vierte Einrichtung die zweite Kraft mit einer maximalen Größe erzeugt, wenn sich der zweite Flansch (24) im wesentlichen an der distalen Position befindet, und mit einer minimalen Größe, wenn sich der zweite Flansch (24) im wesentlichen in der proximalen Position befindet.

2. Eine Antriebsrolle (12) gemäß Anspruch 1, **dadurch gekennzeichnet, daß** es zumindest zwei Paare von Torsionsfedern (30) und entsprechenden konvex gebogenen Rampen (50) gibt.

3. Eine Antriebsrolle (12) gemäß Anspruch 1, **dadurch gekennzeichnet, daß** es drei Paare von Torsionsfedern (30) und entsprechenden konvex gebogenen Rampen (50) gibt.

4. Eine Antriebsrolle (12) gemäß einem der Ansprüche 1 bis 3, **dadurch gekennzeichnet, daß** der Hebelarm (30b) jeder Torsionsfeder (30) eine Gleitschiene (31) mit geringer Reibung umfaßt.

5. Eine Antriebsrolle (12) für ein kontinuierlich veränderliches Getriebe (10), wobei die Antriebsrolle (12) koaxial um eine Antriebswelle (16) befestigbar und mit einer variablen Drehgeschwindigkeit drehbar ist, wobei die Antriebsrolle (12) folgende Merkmale umfaßt:
einen ersten Flansch (22) mit einer Seite, die mit einer konischen Wand (22a) versehen ist;
einen zweiten Flansch (24) mit gegenüberliegenden ersten und zweiten Seiten, wobei der zweite Flansch (24) koaxial mit dem ersten Flansch (22) ist und eine konische Wand (24a) aufweist, die auf der ersten Seite desselben vorgesehen ist, wobei die konische Wand (24a) der konischen Wand (22a) des ersten Flansch (22) zugewandt ist, um eine Antriebsriemenaufnahmerille (25) zu bilden, um die ein Antriebsriemen (20) teilweise gewickelt ist, wobei der zweite Flansch (24) bezüglich des ersten Flansch (22) zwischen einer distalen Position und einer proximalen Position axial beweglich ist, wobei die Antriebsriemenaufnahmerille (25) breiter ist als der Antriebsriemen (20), wenn sich der zweite Flansch (20) in der distalen Position befindet, wodurch es keinen Kontakt zwischen der konischen Wand (24a) des zweiten Flansch (24) und einer entsprechenden Seite des Antriebsriemens (20) gibt, wenn sich der zweite Flansch (24) in der distalen Position befindet;
eine erste Einrichtung zum Verbinden des ersten Flansch (22) mit der Antriebswelle (16) in einer Drehmomentübertragungseingriffnahme;
eine zweite Einrichtung zum Verbinden des zweiten Flansch (24) mit der Antriebswelle (16) in einer Drehmomentübertragungseingriffnahme;
eine dritte Einrichtung zum Erzeugen einer ersten Kraft, die den zweiten Flansch (24) zwingt, sich zu dem ersten Flansch (22) zu bewegen, wobei die dritte Einrichtung auf die Drehgeschwindigkeit der Antriebsrolle (12) anspricht; und
eine vierte Einrichtung zum Erzeugen einer zweiten Kraft, die den zweiten Flansch (24) zwingt, sich weg von dem ersten Flansch (22) zu bewegen;
wobei die Antriebsrolle (12) **dadurch gekennzeichnet ist, daß** die vierte Einrichtung einen Magnet (100) umfaßt, der entweder an der zweiten Seite des zweiten Flansch (24) oder einer Innenseite der Endplatte (32) befestigt ist, wobei die andere derselben mit einem entsprechenden magnetisch anziehenden Abschnitt ausgerichtet zu dem Magnet versehen ist, wodurch die vierte Einrichtung die zweite Kraft mit einer maximalen Größe erzeugt, wenn sich der zweite Flansch (24) im wesentlichen an der distalen Position befindet, und mit einer minimalen Größe, wenn sich der zweite Flansch (24) im wesentlichen an der proximalen Position befindet.

6. Eine Antriebsrolle (12) für ein kontinuierlich veränderliches Getriebe (10), wobei die Antriebsrolle (12) koaxial um eine Antriebswelle (16) befestigbar und mit einer variablen Drehgeschwindigkeit drehbar ist, wobei die Antriebsrolle (12) folgende Merkmale umfaßt:
einen ersten Flansch (22) mit einer Seite, die mit einer konischen Wand (22a) versehen ist;
einen zweiten Flansch (24) mit gegenüberliegenden ersten und zweiten Seiten, wobei der zweite Flansch (24) koaxial mit dem ersten Flansch (22) ist und eine konische Wand (24a) aufweist, die auf der ersten Seite desselben vorgesehen ist, wobei die konische Wand (24a) der konischen Wand (22a) des ersten Flansch (22) zugewandt ist, um eine Antriebsriemenaufnahmerille (25) zu bilden, um die ein Antriebsriemen (20) teilweise gewickelt ist, wobei der zweite Flansch (24) bezüglich des ersten Flansch (22) zwischen einer distalen Position und einer proximalen Position axial beweglich ist, wobei die Antriebsriemenaufnahmerille (25) breiter ist als der Antriebsriemen (20), wenn sich der zweite Flansch (20) in der distalen Position befindet, wodurch es keinen Kontakt zwischen der konischen Wand (24a) des zweiten Flansch (24) und einer entsprechenden Seite des Antriebsriemens (20) gibt, wenn sich der zweite Flansch (24) in der distalen Position befindet;
eine erste Einrichtung zum Verbinden des ersten Flansch (22) mit der Antriebswelle (16) in einer Drehmomentübertragungseingriffnahme;
eine zweite Einrichtung zum Verbinden des zweiten Flansch (24) mit der Antriebswelle (16) in einer Drehmomentübertragungseingriffnahme;
eine dritte Einrichtung zum Erzeugen einer ersten Kraft, die den zweiten Flansch (24) zwingt, sich zu dem ersten Flansch (22) zu bewegen, wobei die dritte Einrichtung auf die Drehgeschwindigkeit der Antriebsrolle (12) anspricht; und
eine vierte Einrichtung zum Erzeugen einer zweiten Kraft, die den zweiten Flansch (24) zwingt, sich weg von dem ersten Flansch (22) zu bewegen;
wobei die Antriebsrolle (12) **dadurch gekennzeichnet ist, daß** die vierte Einrichtung eine Belleville-Feder (200) umfaßt, die zwischen der Endplatte (32) und dem zweiten Flansch (24) befestigt ist, wobei die Belleville-Feder (200) vorgespannt ist, um im wesentlichen mit einer negativen Federkonstante zu arbeiten, wobei die vierte Einrichtung die zweite Kraft mit einer maximalen Größe erzeugt, wenn sich der zweite Flansch (24) im wesentlichen an der distalen Position befindet, und mit einer minimalen Größe, wenn sich der zweite Flansch (24) im wesentlichen an der proximalen Position befindet.

7. Eine Antriebsrolle (12) gemäß einem der Ansprüche 1 bis 6, **dadurch gekennzeichnet, daß** die dritte Einrichtung zumindest zwei Fliehgewichte (40) umfaßt, die symmetrisch um die Antriebswelle (16) angeordnet sind, wobei jedes Fliehgewicht (40) zwischen einem entsprechenden Paar von entgegengesetzten und nach außen konvergierenden Rampen (42, 44) eingestellt ist, wobei eine der Rampen (42, 44) von jedem Paar auf der zweiten Seite des zweiten Flansch (24) vorgesehen ist, und die andere auf einer Innenseite einer Endplatte (32) vorgesehen ist, die bezüglich des ersten Flansch (22) befestigt ist, wobei die Innenseite der zweiten Seite des zweiten Flansch (24) zugewandt ist.

8. Eine Antriebsrolle (12) gemäß einem der Ansprüche 1 bis 7, **dadurch gekennzeichnet, daß** die zweite Einrichtung eine gleitende Eingriffnahme zwischen dem zweiten Flansch (24) und der Endplatte (32) umfaßt.

9. Eine Antriebsrolle (12) gemäß Anspruch 8, **dadurch gekennzeichnet, daß** die zweite Einrichtung zumindest einen Gleitknopf (33) umfaßt, der entweder auf dem zweiten Flansch (24) oder der Endplatte (32) angeordnet ist, und zumindest einen entsprechenden Schlitz (34), der auf dem anderen von entweder dem zweiten Flansch (24) oder der Endplatte (32) angeordnet ist.

10. Eine Antriebsrolle (12) gemäß einem der Ansprüche 1 bis 9, **dadurch gekennzeichnet, daß** die erste Einrichtung eine starre Verbindung zwischen dem ersten Flansch (22) und der Antriebswelle (16) umfaßt.

11. Eine Antriebsrolle (12) gemäß einem der Ansprüche 1 bis 10, **dadurch gekennzeichnet, daß** dieselbe ein Lager (36) umfaßt, das koaxial um die Antriebswelle (16) zwischen dem ersten (22) und dem zweiten Flansch (24) befestigbar ist, wobei das Lager (36) einen äußeren Laufring aufweist, der eine äußere Oberfläche umfaßt, die eine Innenseite eines oberen Abschnitts des Antriebsriemens (20) trägt, wenn die konische Wand (24a) des zweiten Flansch (24) nicht in Kontakt mit der entsprechenden Seite des Antriebsriemens (20) ist.

12. Eine Antriebsrolle (12) gemäß einem der Ansprüche 1 bis 11, **dadurch gekennzeichnet, daß** die Antriebsrolle (12) mechanisch mit der Antriebswelle (16) eines Rollers verbunden ist.

## Revendications

1. Poulie d'entraînement (12) pour une transmission à variation continue (10), la poulie d'entraînement (12) pouvant être montée de manière coaxiale autour d'un arbre d'entraînement (16) et pouvant tourner à une vitesse de rotation variable, la poulie d'entraînement (12) comprenant :
une première bride (22) présentant un côté pourvu d'une paroi conique (22a) ;
une seconde bride (24) présentant un premier et un second côté opposés, la seconde bride (24) étant coaxiale à la première bride (22) et présentant une paroi conique (24a) prévue sur son premier côté, la paroi conique (24a) faisant face à la paroi conique (22a) de la première bride (22), pour former une gorge de réception de courroie d'entraînement (25) autour de laquelle est partiellement enroulée une courroie d'entraînement (20), la seconde bride (24) pouvant se déplacer axialement par rapport à la première bride (22), entre une position distale et une position proximale, la gorge de réception de courroie d'entraînement (25) étant plus large que la courroie d'entraînement (20) lorsque la seconde bride (24) est en position distale, d'où il n'y a aucun contact entre la paroi conique (24a) de la seconde bride (24) et un côté correspondant de la courroie d'entraînement (20) lorsque la seconde bride (24) est en position distale ;
un premier moyen destiné à connecter la première bride (22) à l'arbre d'entraînement (16) selon une venue en prise à transmission de couple ;
un second moyen destiné à connecter la seconde bride (24) à l'arbre d'entraînement (16) selon une venue en prise à transmission de couple ;
un troisième moyen destiné à générer une première force poussant la seconde bride (24) de manière à se déplacer vers la première bride (22), le troisième moyen réagissant à la vitesse de rotation de la poulie d'entraînement (12) ; et
un quatrième moyen destiné à générer une seconde force poussant la seconde bride (24) de manière à se déplacer en s'éloignant de la première bride (22) ;
la poulie d'entraînement (12) étant **caractérisée par le fait que** le quatrième moyen comprend au moins un ressort de torsion (30) présentant au moins une partie en spirale (30a) et un bras de levier (30b), le bras de levier (30b) venant en prise de manière coulissante avec une rampe courbée convexe (50) correspondante, la partie en spirale (30a) étant connectée à l'une parmi la seconde bride (24) et la plaque d'extrémité (32), et la rampe courbée convexe (50) étant prévue sur l'autre de ces dernières, le quatrième moyen générant la seconde force avec une amplitude maximale lorsque la seconde bride (24) se trouve sensiblement dans la position distale et avec une amplitude minimale lorsque la seconde bride (24) se trouve sensiblement dans la position proximale.

2. Poulie d'entraînement (12) selon la revendication 1, **caractérisée par le fait qu'**il y a au moins deux paires de ressort de torsion (30) et de rampe courbée convexe (50) correspondante.

3. Poulie d'entraînement (12) selon la revendication 1, **caractérisée par le fait que** qu'il y a trois paires de ressort de torsion (30) et de rampe courbée convexe (50) correspondante.

4. Poulie d'entraînement (12) selon l'une quelconque des revendications 1 à 3, **caractérisée par le fait que** le bras de levier (30b) de chaque ressort de torsion (30) comprend un patin à faible friction (31).

5. Poulie d'entraînement (12) pour une transmission à variation continue (10), la poulie d'entraînement (12) pouvant être montée de manière coaxiale autour d'un arbre d'entraînement (16) et pouvant tourner à une vitesse de rotation variable, la poulie d'entraînement (12) comprenant :
une première bride (22) présentant un côté pourvu d'une paroi conique (22a) ;
une seconde bride (24) présentant un premier et un second côté opposés, la seconde bride (24) étant coaxiale à la première bride (22) et présentant une paroi conique (24a) prévue sur son premier côté, la paroi conique (24a) faisant face à la paroi conique (22a) de la première bride (22), pour former une gorge de réception de courroie d'entraînement (25) autour de laquelle est partiellement enroulée une courroie d'entraînement (20), la seconde bride (24) pouvant se déplacer axialement par rapport à la première bride (22), entre une position distale et une position proximale, la gorge de réception de courroie d'entraînement (25) étant plus large que la courroie d'entraînement (20) lorsque la seconde bride (24) se trouve dans la position distale, d'où il n'y a aucun contact entre la paroi conique (24a) de la seconde bride (24) et un côté correspondant de la courroie d'entraînement (20) lorsque la seconde bride (24) se trouve dans la position distale ;
un premier moyen destiné à connecter la première bride (22) à l'arbre d'entraînement (16) selon une venue en prise à transmission de couple ;
un second moyen destiné à connecter la seconde bride (24) à l'arbre d'entraînement (16) selon une venue en prise à transmission de couple ;
un troisième moyen destiné à générer une première force poussant la seconde bride (24) de manière à se déplacer vers la première bride (22), le troisième moyen réagissant à la vitesse de rotation de la poulie d'entraînement (12) ; et
un quatrième moyen destiné à générer une seconde force poussant la seconde bride (24) de manière à se déplacer en s'éloignant de la première bride (22) ;
la poulie d'entraînement (12) étant **caractérisée par le fait que** le quatrième moyen comprend un aimant (100) monté sur l'une parmi le second côté de la seconde bride (24) et un côté intérieur de la plaque d'extrémité (32), l'autre de ces dernières étant pourvue d'une partie correspondante pouvant être attirée magnétiquement, alignée sur l'aimant (100), le quatrième moyen générant la seconde force avec une amplitude maximale lorsque la seconde bride (24) se trouve sensiblement dans la position distale et avec une amplitude minimale lorsque la seconde bride (24) se trouve sensiblement dans la position proximale.

6. Poulie d'entraînement (12) pour une transmission à variation continue (10), la poulie d'entraînement (12) pouvant être montée de manière coaxiale autour d'un arbre d'entraînement (16) et pouvant tourner à une vitesse de rotation variable, la poulie d'entraînement (12) comprenant :
une première bride (22) présentant un côté pourvu d'une paroi conique (22a) ;
une seconde bride (24) présentant un premier et un second côté opposés, la seconde bride (24) étant coaxiale à la première bride (22) et présentant une paroi conique (24a) prévue sur son premier côté, la paroi conique (24a) faisant face à la paroi conique (22a) de la première bride (22), pour former une gorge de réception de courroie d'entraînement (25) autour de laquelle est partiellement enroulée une courroie d'entraînement (20), la seconde bride (24) pouvant se déplacer axialement par rapport à la première bride (22), entre une position distale et une position proximale, la gorge de réception de courroie d'entraînement (25) étant plus large que la courroie d'entraînement (20) lorsque la seconde bride (24) est en position distale, d'où il n'y a aucun contact entre la paroi conique (24a) de la seconde bride (24) et un côté correspondant de la courroie d'entraînement (20) lorsque la seconde bride (24) est en position distale ;
un premier moyen destiné à connecter la première bride (22) à l'arbre d'entraînement (16) selon une venue en prise à transmission de couple ;
un second moyen destiné à connecter la seconde bride (24) à l'arbre d'entraînement (16) selon une venue en prise à transmission de couple ;
un troisième moyen destiné à générer une première force poussant la seconde bride (24) de manière à se déplacer vers la première bride (22), le troisième moyen réagissant à la vitesse de rotation de la poulie d'entraînement (12) ; et
un quatrième moyen destiné à générer une seconde force poussant la seconde bride (24) de manière à se déplacer en s'éloignant de la première bride (22) ;
la poulie d'entraînement (12) étant **caractérisée par le fait que** le quatrième moyen comprend un ressort Belleville (200) monté entre la plaque d'extrémité (32) et la seconde bride (24), le ressort Belleville (200) étant préchargé de manière à fonctionner substantiellement à un facteur de rappel négatif, le quatrième moyen générant la seconde force avec une amplitude maximale lorsque la seconde bride (24) se trouve sensiblement dans la position distale et avec une amplitude minimale lorsque la seconde bride (24) se trouve sensiblement dans la position proximale.

7. Poulie d'entraînement (12) selon l'une quelconque des revendications 1 à 6, **caractérisée par le fait que** le troisième moyen comprend au moins deux masselottes d'avance centrifuges (40) disposées de manière symétrique autour de l'arbre d'entraînement (16), chaque masselotte d'avance centrifuge (40) étant placée entre une paire correspondante de rampes opposées convergeant vers l'extérieur (42, 44), l'une des rampes (42, 44) de chaque paire étant prévue sur le second côté de la seconde bride (24) et l'autre étant prévue sur un côté intérieur d'une plaque d'extrémité (32) fixe par rapport à la première bride (22), le côté intérieur faisant face au second côté de la seconde bride (24).

8. Poulie d'entraînement (12) selon l'une quelconque des revendications 1 à 7, **caractérisée par le fait que** le second moyen comprend une venue en prise par coulissement entre la seconde bride (24) et la plaque d'extrémité (32).

9. Poulie d'entraînement (12) selon la revendication 8, **caractérisée par le fait que** le second moyen comprend au moins un bouton coulissant (33) situé sur l'une parmi la seconde bride (24) et la plaque d'extrémité (32), et au moins une lumière (34) correspondante située sur l'autre parmi la seconde bride (24) et la plaque d'extrémité (32).

10. Poulie d'entraînement (12) selon l'une quelconque des revendications 1 à 9, **caractérisée par le fait que** le premier moyen comprend une connexion rigide entre la première bride (22) et l'arbre d'entraînement (16).

11. Poulie d'entraînement (12) selon l'une quelconque des revendications 1 à 10, **caractérisée par le fait qu'**elle comprend un palier de roulement (36) pouvant être monté de manière coaxiale autour de l'arbre d'entraînement (16), entre la première (22) et la seconde bride (24), le palier de roulement (36) présentant une bande de roulement extérieure comportant une surface extérieure supportant un côté intérieur d'un segment supérieur de la courroie d'entraînement (20) lorsque la paroi conique (24a) de la seconde bride (24) n'est pas en contact avec le côté correspondant de la courroie d'entraînement (20).

12. Poulie d'entraînement (12) selon l'une quelconque des revendications 1 à 11, **caractérisée par le fait que** la poulie d'entraînement (12) est reliée mécaniquement à l'arbre d'entraînement (16) d'un scooter.
